# FASCICULE DE BREVET EUROPEEN

(11) **EP 1 312 864 B1**
(45) Date de publication et mention de la délivrance du brevet: **26.07.2006**
(21) Numéro de dépôt: 02292879.0
(22) Date de dépôt: 20.11.2002
(51) Int. Cl.: F23K 5/14, F02C 7/232

(54) **Dispositif doseur de combustible pour injecteur de turbomachine**
Kraftstoffdosierungsvorrichtung für die Einspritzdüse einer Turbomaschine
Dosing device for turbomachine fuel injector

(30) Priorité: 20.11.2001 FR 0114974
(43) Date de publication de la demande: 21.05.2003
(73) Titulaire: HISPANO SUIZA, 92700 Colombes (FR)
(72) Inventeur: D'Agostino, Guy, 94400 Vitry sur Seine (FR); Hugues, Michel, 77590 Bois le Roi (FR); Michau, Marion, 94300 Vincennes (FR); Rodrigues, José, 77176 Nandy (FR); Tiepel, Alain, 77930 Chailly en Biere (FR)
(74) Mandataire: Joly, Jean-Jacques

(56) Documents cités:
- EP-A- 0 518 594
- GB-A- 2 250 086
- US-A- 2 704 035
- US-A- 3 662 959
- US-A- 4 226 365
- US-A- 4 570 668
- US-A- 5 732 730

## Description

### Arrière-plan de l'invention

La présente invention se rapporte au domaine général des dispositifs de réglage de débit d'un fluide, et plus particulièrement à celui des dispositifs de réglage du débit d'alimentation des injecteurs de combustible prévus pour les chambres de combustion de turbomachines.

De façon connue, un moteur de turbomachine comporte plusieurs injecteurs permettant d'alimenter en carburant et en air la chambre de combustion lors du démarrage et du fonctionnement normal du moteur de la turbomachine. Principalement, il existe deux types d'injecteurs : les injecteurs dits « aéromécaniques » conçus pour deux débits de carburant (primaire et secondaire) suivant les phases de fonctionnement du moteur (allumage, de faible à pleine puissance), et les injecteurs dits « aérodynamiques » qui ne comportent qu'un seul circuit de carburant pour toutes les phases de fonctionnement. La présente invention vise plus particulièrement les injecteurs appartenant à cette seconde catégorie.

Comme connu en soi, par exemple de US 2,704,035, un injecteur de combustible pour moteur de turbomachine comporte notamment une soupape de dosage agencée pour s'ouvrir sous une pression d'alimentation du combustible prédéterminée et rester ouverte en réponse à une augmentation de cette pression d'alimentation afin de permettre l'admission du combustible puis son éjection vers le nez d'injecteur au niveau duquel le combustible est diffusé dans la chambre de combustion. Dans US 5,732,730, le réglage du débit d'alimentation en combustible est réalisé par l'intermédiaire de fentes de dosage prévues au niveau d'une tête de la soupape et dont les sections de passage varient en fonction de la pression d'alimentation appliquée : plus cette pression est élevée, plus les sections de passage des fentes sont importantes.

En pratique, on constate que dans une chambre de combustion alimentée en carburant et en air par plusieurs injecteurs comme celui décrit ci-dessus, il existe des écarts de débit à l'ouverture et/ou à la fermeture de leur soupape respective lorsque ces injecteurs sont soumis à une même pression d'alimentation. Ces écarts de débit entre injecteurs sont générés par un phénomène d'hystérésis provenant du frottement entre la soupape de l'injecteur et la douille dans laquelle elle coulisse. Ainsi, deux injecteurs identiques soumis à la même pression d'alimentation peuvent présenter des sections de passage différentes au niveau de leurs fentes de dosage. Il en résulte une hétérogénéité d'alimentation en carburant dans la chambre de combustion pouvant atteindre 45% ce qui peut entraîner des difficultés d'allumage du moteur de la turbomachine et même empêcher cet allumage.

### Objet et résumé de l'invention

La présente invention vise donc à pallier de tels inconvénients en proposant un dispositif doseur de fluide pour injecteur de turbomachine qui permet de supprimer les effets causés par l'hystérésis en utilisant la course morte de la tête de soupape, c'est à dire la course entre le début d'ouverture de celle-ci et le moment où sont atteintes les fentes de dosage. Elle vise en outre un procédé de dosage de fluide mettant en oeuvre un tel dispositif.

A cet effet, il est prévu un dispositif doseur de fluide selon la revendication 1.

Le dispositif permet ainsi d'obtenir un débit fixe de fluide vers les moyens d'utilisation qui dépend uniquement de la section de passage de l'orifice transversal. Celui-ci débouche vers les moyens d'utilisation à partir d'une pression prédéterminée d'alimentation de fluide qui est inférieure à une pression pour laquelle les fentes de dosage alimentent les moyens d'utilisation. De la sorte, tout retard dû au phénomène d'hystérésis et conduisant à une hétérogénéité d'alimentation est évité. L'hystérésis n'a donc plus d'effet sur les faibles débits.

Avantageusement, le dispositif doseur selon l'invention comporte un premier diaphragme disposé en amont de l'orifice transversal dans le sens d'écoulement du fluide. Ce premier diaphragme permet de fixer à une valeur déterminée le débit de fluide traversant l'orifice transversal.

Le dispositif doseur de fluide selon l'invention trouve particulièrement application comme dispositif dosage de combustible d'injecteur pour moteur de turbomachine. Dans cette application, l'hystérésis n'a plus d'effet sur les faibles débits et on obtient une meilleure homogénéité d'alimentation en combustible dans la chambre de combustion du moteur, notamment lors de la phase délicate d'allumage du moteur.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en coupe longitudinale d'un injecteur de combustible de moteur de turbomachine comportant un dispositif doseur selon la présente invention ;
- les figures 2 à 4 représentent des vues en coupe du dispositif doseur de la figure 1 selon trois modes de fonctionnement différents ; et
- la figure 5 est un graphique illustrant l'évolution de l'hystérésis pour l'injecteur de la figure 1 et pour un injecteur de l'art antérieur.

### Description détaillée d'un mode de réalisation

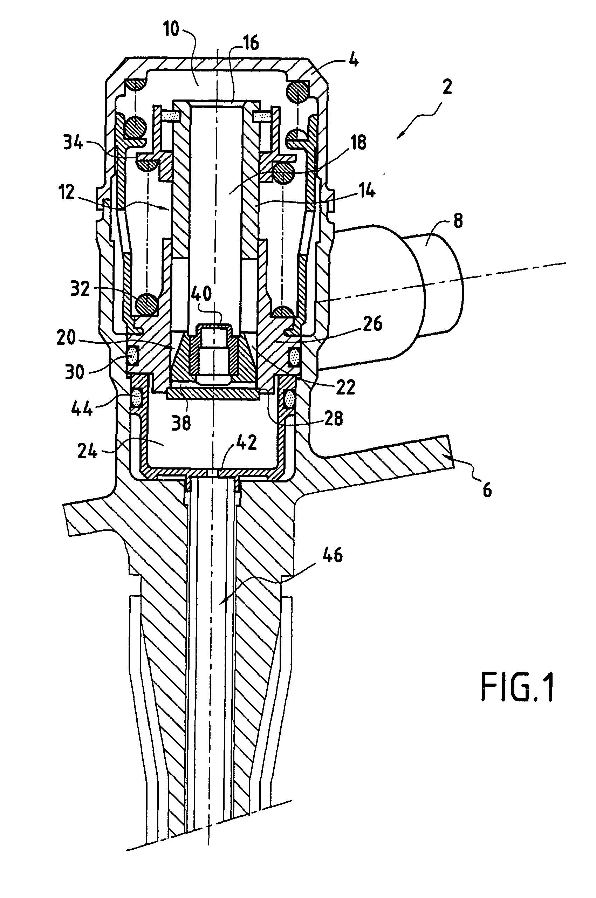

On se réfère d'abord à la figure 1 qui représente en coupe longitudinale un injecteur de combustible pour moteur de turbomachine comportant un dispositif doseur selon l'invention.

L'injecteur de combustible 2 comporte un corps d'injecteur 4 comportant une bride 6 adaptée pour être fixée sur un corps de turbomachine (non représenté). L'injecteur de combustible 2 illustré est du type « aérodynamique », c'est à dire qu'il ne comporte qu'un seul circuit de combustible.

Le corps d'injecteur 4 comporte un orifice d'admission 8 de combustible destiné à recevoir le combustible sous pression provenant d'une pompe appropriée (non représentée). Le combustible débouche dans une chambre d'admission 10 avant de traverser un dispositif doseur 12 selon l'invention.

Le dispositif doseur 12 de combustible est monté directement dans la chambre d'admission de combustible 10. Il comprend une soupape de dosage 14 permettant de contrôler le flux de combustible traversant le dispositif. Cette soupape de dosage est pourvue à une première extrémité d'une ouverture 16 débouchant dans un alésage longitudinal 18 d'admission du combustible, et à une seconde extrémité, formant fond, d'un épaulement sensiblement circulaire formant tête de soupape 20. Cette tête de soupape comporte sur son pourtour des fentes de dosage 22 du combustible s'ouvrant dans l'alésage longitudinal 18 et définissant des sections de passage variables vers des moyens d'utilisation du combustible. Ces fentes 22 sont conformées très précisément pour doser la quantité de combustible s'écoulant depuis la chambre d'admission 10 vers une chambre de réception 24 du combustible formée dans le corps d'injecteur 4.

La soupape de dosage 14 peut coulisser dans une douille 26 cylindrique dont une extrémité comporte un évidemment circulaire 28 formant siège de soupape. Cette douille est maintenue dans le corps d'injecteur 4 de façon étanche par l'intermédiaire d'un moyen d'étanchéité 30 du type joint. La douille 26 forme également une surface d'appui pour une extrémité d'un ressort hélicoïdal 32 dont l'extrémité opposée est montée dans un élément annulaire de retenue 34 fixé sur l'extrémité de la soupape comportant l'alésage longitudinal 18 d'admission de combustible. Le ressort 32 est réglé de manière à permettre à la soupape de dosage 14 de s'ouvrir pour une pression de combustible prédéterminée et de rester ouverte sous l'augmentation de cette pression d'alimentation.

Selon l'invention, le dispositif doseur 12 est en outre muni d'au moins un orifice sensiblement transversal 38 disposé au niveau de la tête de soupape 20, en aval des fentes de dosage 22 dans le sens d'écoulement du combustible. Cet orifice transversal débouche dans l'alésage longitudinal 18 d'admission de fluide et communique avec la chambre de réception 24 du combustible. Cet orifice permet ainsi de définir une section de passage fixe vers les moyens d'utilisation du combustible et d'assurer de façon efficace le débit d'allumage du moteur de la turbomachine correspondant aux faibles débits de combustible (inférieur à 30 litres par heure environ).

Toujours selon l'invention, le débit de combustible traversant l'orifice transversal 38 peut être avantageusement fixé à une première valeur déterminée en plaçant un premier diaphragme 40 sur le trajet du combustible, entre l'alésage longitudinal et cet orifice transversal. Le passage de combustible est ainsi contrôlé par l'ouverture pratiquée sur le premier diaphragme 40. Cette ouverture est conformée de manière à permettre un débit de combustible la traversant sensiblement plus faible que celui traversant l'orifice transversal 38. De la sorte, le débit de combustible traversant le premier diaphragme 40 puis l'orifice transversal 38 est uniquement fonction de l'ouverture pratiquée sur ce premier diaphragme. Cette caractéristique est particulièrement avantageuse pour les très faibles débits de combustible. Il est en effet délicat d'usiner dans la tête de soupape 20 un orifice transversal 38 ayant une section de passage très faible. Le premier diaphragme 40 permet ainsi d'éviter une telle opération. Le premier diaphragme 40 peut par exemple être un bol percé monté serré dans le fond de la tête de soupape 20.

L'injecteur de combustible représenté sur la figure 1 comporte un second diaphragme 42 pour les grands débits (supérieurs à 100 litres par heure environ) interposé entre la soupape de dosage 14 et les moyens d'utilisation du combustible. Plus précisément, ce second diaphragme 42 également en forme de bol percé est disposé au fond de la chambre de réception 24 de combustible. Le second diaphragme est fixé de façon étanche sur le corps d'injecteur 4 par l'intermédiaire de moyens d'étanchéité 44 du type joint et permet de fixer à une seconde valeur déterminée le débit de combustible le traversant. L'ouverture pratiquée sur ce second diaphragme débouche dans un canal d'éjection 46 du combustible qui dirige celui-ci vers un nez d'injecteur (non représenté). A l'aide de moyens connus en soi, ce nez d'injecteur permet d'assurer soit la pulvérisation du combustible de façon mécanique ou aérodynamique, soit sa vaporisation.

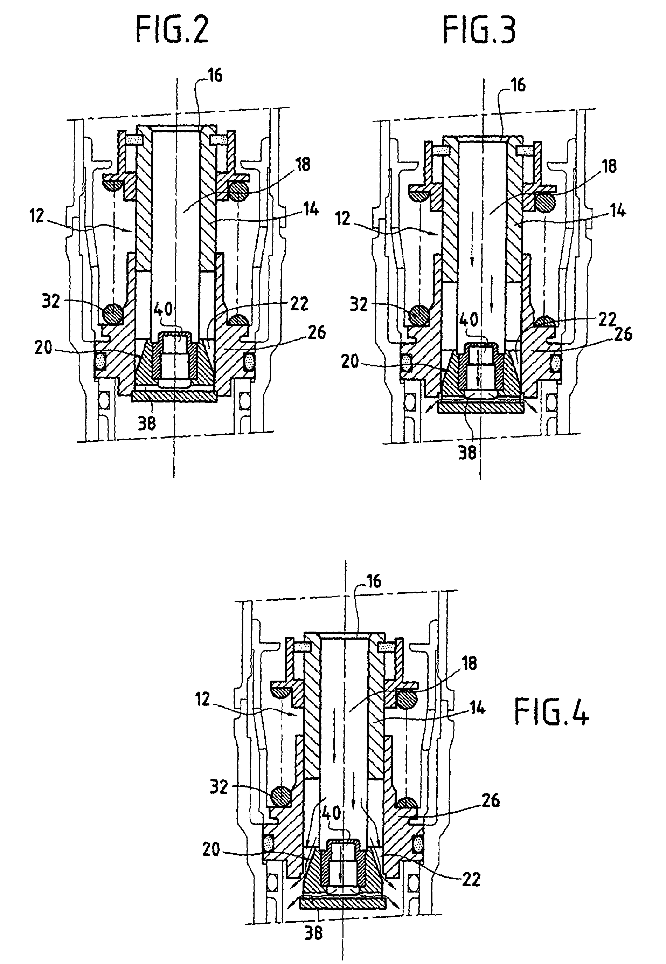

On décrira maintenant le fonctionnement du dispositif doseur selon l'invention, en se référant plus particulièrement aux figures 2 à 4.

La figure 2 représente le dispositif doseur de combustible en position initiale de repos ; la soupape de dosage 14 est fermée et repose sur son siège 28. Le combustible qui pénètre dans la chambre d'admission 10 et dans l'alésage longitudinal 18 par l'intermédiaire de l'ouverture 16 exerce une pression qui n'est pas suffisante pour permettre l'ouverture de la soupape de dosage.

La figure 3 illustre le dispositif doseur lorsqu'une pression prédéterminée définissant une première pression de seuil S1 est atteinte. Dans ce cas, la soupape de dosage 14 se déplace sous l'effet de la pression d'alimentation et coulisse dans la douille 26 provoquant une ouverture de la tête de soupape 20. Le combustible présent dans la chambre d'admission 10 et dans la soupape de dosage 14 ressort dans la chambre de réception 24 par l'intermédiaire de l'orifice transversal 38 après avoir traversé le premier diaphragme 40. Cette phase peut par exemple correspondre à la phase d'allumage d'un moteur de turbomachine équipé de ce dispositif doseur. Le débit de combustible est fixe et il est fonction, soit de la section de passage de l'orifice transversal 38, soit de l'ouverture pratiquée sur le premier diaphragme 40 si celle-ci est plus faible.

Sur la figure 4, le dispositif doseur est dans une position de semi-ouverture pour laquelle la pression d'alimentation est supérieure à une seconde pression de seuil S2, qui est elle-même supérieure à la première pression de seuil S1. Cette seconde pression de seuil S2 correspond à une pression d'alimentation prédéterminée à partir de laquelle les fentes de dosage 22 de la tête de soupape 20 débouchent dans la chambre de réception 24. Le ressort 32 se comprime sous l'effet de la pression d'alimentation et le combustible continue à traverser la soupape de dosage 14 par l'intermédiaire de l'orifice transversal 38. En outre, le combustible présent dans l'alésage 18 de la soupape de dosage ressort également au travers des fentes de dosage 22. Les sections de passage variables de ces fentes permettent d'assurer le réglage du débit d'injection, par exemple en fonctionnement normal du moteur de la turbomachine.

Ainsi, le fonctionnement du dispositif doseur selon l'invention consiste en ce qu'on définit un premier débit D1 de combustible traversant un orifice fixe sensiblement transversal disposé au niveau de la soupape de dosage en aval des fentes de dosage et s'écoulant vers les moyens d'utilisation à partir d'une pression d'alimentation prédéterminée définissant une première pression de seuil S1 inférieure à la seconde pression de seuil S2. En outre, on injecte du combustible vers les moyens d'utilisation de ce combustible (au niveau du nez de l'injecteur) au travers de la soupape de dosage pouvant coulisser dans une douille sous une pression d'alimentation du combustible, un second débit de fluide D2 traversant les fentes de dosage de combustible définissant des sections de passage variables pratiquées au niveau de la soupape de dosage, et s'écoulant vers les moyens d'utilisation à partir d'une pression d'alimentation prédéterminée définissant la seconde pression de seuil S2. Le premier débit D1 peut être inférieur au second débit D2 par exemple.

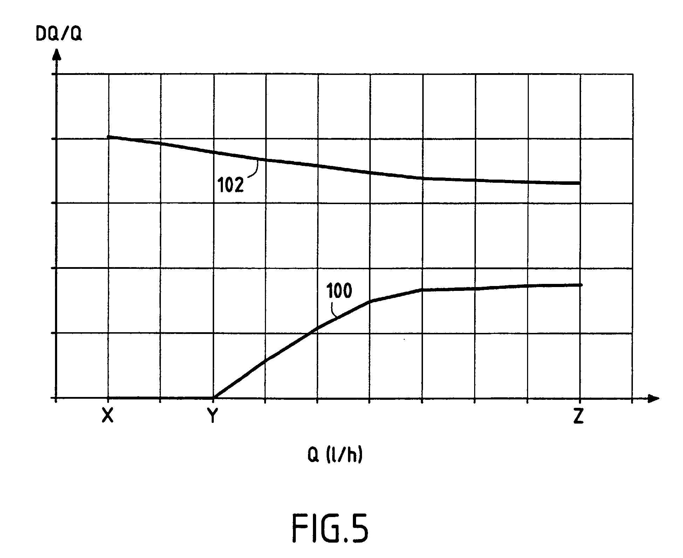

La figure 5 illustre bien l'effet de l'orifice transversal 38 et du premier diaphragme 40 sur le dispositif doseur. Cette figure représente un graphique montrant l'évolution de l'hystérésis pour un dispositif doseur selon l'invention (courbe 100) et pour un dispositif doseur de l'art antérieur (courbe 102). Sur la courbe 100, on observe une absence d'hétérogénéité pour des débits compris entre X et Y litres par heure environ. Au-delà de ces débits, l'hétérogénéité reste toutefois acceptable jusqu'à Z l/h environ. L'ajout de l'orifice transversal 38 et du premier diaphragme 40 permet donc d'obtenir une hétérogénéité satisfaisante sur toute la plage d'allumage d'un moteur de turbomachine comportant un tel dispositif utilisé comme dispositif doseur de combustible.

La présente invention a été décrite dans son utilisation au niveau d'un injecteur de combustible dans une chambre de combustion de turbomachine. Bien entendu, ce dispositif peut être appliqué plus généralement à tout dispositif doseur de fluide comportant une soupape de dosage pouvant coulisser dans une douille sous une pression d'alimentation de fluide afin de permettre l'admission d'un fluide puis son éjection vers des moyens d'utilisation de ce fluide, la soupape comportant à une première extrémité une ouverture débouchant dans un alésage longitudinal d'admission du fluide et à une seconde extrémité formant fond une tête de soupape munie de fentes de dosage de fluide s'ouvrant dans l'alésage longitudinal et définissant des sections de passage variables vers les moyens d'utilisation du fluide. Dans un tel dispositif, et conformément à l'invention, il conviendra de prévoir au niveau de la tête de soupape au moins un orifice sensiblement transversal disposé en aval des fentes de dosage dans le sens d'écoulement du fluide, l'orifice communiquant avec l'alésage longitudinal et définissant au moins une section de passage fixe vers les moyens d'utilisation du fluide.

## Revendications

1. Dispositif doseur (12) de fluide comportant une soupape de dosage (14) pouvant coulisser dans une douille (26) sous une pression d'alimentation de fluide afin de permettre l'admission d'un fluide puis son éjection vers des moyens d'utilisation (24) de ce fluide, la soupape comportant à une première extrémité une ouverture (16) débouchant dans un alésage longitudinal (18) d'admission du fluide et à une seconde extrémité formant fond une tête de soupape (20) munie de fentes de dosage (22) de fluide s'ouvrant dans l'alésage longitudinal et définissant des sections de passage variables vers lesdits moyens d'utilisation du fluide, **caractérisé en ce que** ladite tête de soupape comporte en outre au moins un orifice (38) sensiblement transversal formé au travers de ladite tête de soupape et disposé en aval des fentes de dosage dans le sens d'écoulement du fluide, ledit orifice communiquant avec l'alésage longitudinal et définissant au moins une section de passage fixe vers lesdits moyens d'utilisation du fluide.

2. Dispositif selon la revendication 1, **caractérisé en ce que** l'orifice (38) de la tête de soupape (20) communique avec l'alésage longitudinal (18) au travers d'un premier diaphragme (40) permettant de fixer à une valeur déterminée le débit de fluide traversant ledit orifice.

3. Dispositif selon la revendication 2, **caractérisé en ce que** le premier diaphragme (40) est un bol percé monté serré dans le fond de la tête de soupape.

4. Dispositif selon l'une quelconque des revendications précédentes, **caractérisé en ce qu'**il constitue un dispositif de dosage de combustible d'un injecteur de combustible pour moteur de turbomachine.

5. Injecteur (2) de combustible pour moteur de turbomachine, comprenant un corps d'injecteur (4) ayant des moyens d'admission (8) de combustible sous pression, **caractérisé en ce qu'**il comporte en outre un dispositif doseur (12) de combustible selon l'une quelconque des revendications 1 à 4 monté dans ladite chambre d'admission.

6. Injecteur de combustible selon la revendication 5, **caractérisé en ce qu'**il comporte en outre un diaphragme (42) interposé entre la soupape de dosage (14) et les moyens d'utilisation du combustible, et permettant de fixer à une valeur déterminée le débit de combustible traversant ledit diaphragme.

7. Procédé de dosage de fluide dans lequel on injecte un fluide vers des moyens d'utilisation de ce fluide au travers d'une soupape de dosage (14) pouvant coulisser dans une douille (26) sous une pression d'alimentation du fluide, un second débit de fluide (D2) traversant des fentes de dosage (22) de fluide définissant des sections de passage variables pratiquées au niveau d'une tête de ladite soupape de dosage, et s'écoulant vers lesdits moyens d'utilisation à partir d'une pression d'alimentation prédéterminée définissant une seconde pression de seuil (S2), ledit procédé étant **caractérisé en ce qu'**on définit un premier débit (D1) de fluide traversant un orifice fixe (38) sensiblement transversal formé au travers de la tête de la soupape de dosage en aval desdites fentes de dosage et s'écoulant vers lesdits moyens d'utilisation à partir d'une pression d'alimentation prédéterminée définissant une première pression de seuil (S1) inférieure à ladite seconde pression de seuil (S2).

8. Procédé selon la revendication 7, **caractérisé en ce qu'**on fixe à une valeur déterminée, par un premier diaphragme (40), le débit de fluide traversant l'orifice transversal (38).

## Claims

1. A fluid metering device (12) comprising a metering valve (14) capable of sliding in a bushing (26) under fluid feed pressure in order to enable a fluid to be admitted and then ejected towards means (24) for utilizing said fluid, the valve having, at a first end, an opening (16) opening out into a longitudinal fluid admission bore (18), and at a second end forming an end wall, a valve head (20) provided with fluid metering slots (22) opening out into the longitudinal bore and defining varying flow sections leading towards said means for utilizing the fluid, **characterised in that** said valve head further comprises at least one substantially transverse orifice (38) formed through said valve head and disposed downstream from the metering slots in the fluid flow direction, said orifice communicating with the longitudinal bore and defining at least one fixed flow section towards said means for utilizing the fluid.

2. A device according to claim 1, **characterised in that** the orifice (38) of the valve head (20) communicates with the longitudinal bore (18) through a first diaphragm (40) serving to fix the flow rate of the fluid passing through said orifice at a determined value.

3. A device according to claim 2, **characterised in that** the first diaphragm (40) is a pierced bowl mounted firmly in the end of the valve head.

4. A device according to any one of the preceding claims, **characterised in that** it constitutes a fuel metering device in a fuel injector for a turbomachine engine.

5. A fuel injector (2) for a turbomachine engine, the injector comprising an injector body (4) having means (8) for admitting fuel under pressure, **characterised in that** it further includes a fuel metering device (12) according to any one of claims 1 to 4 mounted in said admission chamber.

6. A fuel injector according to claim 5, **characterised in that** it further comprises a diaphragm (42) interposed between the metering valve (14) and the means for utilizing the fuel, and enabling the rate at which fuel passes through said diaphragm to be set at a determined value.

7. A method of metering fluid comprising injecting a fluid towards utilization means for said fluid through a metering valve (14) capable of sliding in a bushing (26) under a fluid feed pressure, a second fluid flow (D2) passing through fluid metering slots (22) defining varying flow sections formed through a head of said metering valve and flowing towards said utilization means from a predetermined feed pressure defining a second pressure threshold (S2), said method being **characterised in that** a first flow (D1) of fluid is defined through a substantially transverse fixed orifice (38) formed through the metering valve head downstream from said metering slots and leading towards said utilization means as from a predetermined feed pressure defining a first pressure threshold (S1) lower than said second pressure threshold (S2).

8. A method according to claim 7, **characterised in that** a first diaphragm (40) sets the rate at which fluid flows through the transverse orifice (38) at a determined value.

## Patentansprüche

1. Fluiddosiervorrichtung (12) umfassend ein Dosierventil (14), das geeignet ist, in einer Buchse (26) unter einem Fluidversorgungsdruck zu gleiten, um den Einlaß eines Fluids und dann seinen Ausstoß zu Benutzungsmitteln (24) dieses Fluids zu ermöglichen, wobei das Ventil an einem ersten Endteil eine Öffnung (16), die in eine Längsbohrung (18) zum Einlaß des Fluids endet und an einem zweiten Endteil, der den Boden bildet, einen Ventilteller (20), der mit Fluiddosierschlitzen (22) versehen ist, die sich in die Längsbohrung öffnen und die variable Durchgangsquerschnitte zu den Benutzungsmitteln des Fluids definieren umfaßt, **dadurch gekennzeichnet, daß** der Ventilteller ferner mindestens eine im wesentlichen quergerichtete Öffnung (38) aufweist, die durch den Ventilteller ausgebildet ist und die stromabwärts von den Dosierschlitzen gemäß der Fließrichtung des Fluids angeordnet ist, wobei die Öffnung mit der Längsbohrung kommuniziert und wobei sie mindestens einen festen Durchgangsquerschnitt zu den Benutzungsmitteln des Fluids definiert.

2. Vorrichtung nach Anspruch 1, **dadurch gekennzeichnet, daß** die Öffnung (38) des Ventiltellers (20) mit der Längsbohrung (18) über ein erstes Diaphragma (40) zu kommunizieren, welches es ermöglicht, den Durchsatz des Fluids, das die Öffnung durchquert, auf einen bestimmten Wert festzulegen.

3. Vorrichtung nach Anspruch 2, **dadurch gekennzeichnet, daß** das erste Diaphragma (40) eine durchbohrte Schale ist, die eingespannt in dem Boden des Ventiltellers montiert ist.

4. Vorrichtung nach einem der vorhergehenden Ansprüche, **dadurch gekennzeichnet, daß** sie eine Vorrichtung zur Brennstoffsdosierung eines Brennstoffeinspritzers für einen Turbomaschinenmotor bildet.

5. Brennstoffeinspritzer (2) für einen Turbomaschinenmotor, umfassend einen Einspritzkörper (4), der Brennstoffeinlassmittel (8) unter Druck aufweist, **dadurch gekennzeichnet, daß** er ferner eine Brennstoffdosiervorrichtung (12) nach einem der Ansprüche 1 bis 4 aufweist, die in der Einlaßkammer eingebaut ist.

6. Brennstoffeinspritzer nach Anspruch 5, **dadurch gekennzeichnet, daß** er ferner eine zweites Diaphragma (42) umfaßt, das zwischen dem Dosierventil (14) und den Benutzungsmitteln des Brennstoffs eingefügt ist und die es ermöglicht, den Durchsatz des Brennstoffs, der das Diaphragma durchquert, auf einen bestimmten Wert festzulegen.

7. Dosierungsverfahren eines Fluids, in dem ein Fluid durch ein Dosierventil (14), das geeignet ist, unter dem Versorgungsdruck des Fluids in einer Buchse (26) zu gleiten, zu Benutzungsmitteln dieses Fluids eingespritzt wird, wobei ein zweiter Fluiddurchsatz (D2) Fluiddosierschlitze (22) durchquert, die variable Durchgangsquerschnitte definieren, die auf der Ebene eines Tellers des Dosierventils ausgebildet sind, definieren und wobei er nach den Benutzungsmitteln ab einem vorbestimmten Versorgungsdruck fließt, der einen zweiten Schwelldruck (S2), wobei das Verfahren **dadurch gekennzeichnet ist, daß** ein erster Fluiddurchsatz (D1), der durch eine im wesentlichen quergerichtete feste Öffnung (38) durchquert, die durch den Dosierventilteller stromabwärts von den Dosierschlitzen ausgebildet ist, und zu den Benutzungsmitteln ab einem vorbestimmten Versorgungsdruck fließt, der einen Schwelldruck (S1) definiert, der kleiner ist als der zweite Schwelldruck (S2) fließt, definiert wird.

8. Verfahren nach Anspruch 7, **dadurch gekennzeichnet, daß** der Fluiddurchsatz, der die quergerichtete Öffnung (38) durchquert, durch ein erstes Diaphragma (40) auf einen vorbestimmten Wert festgelegt wird.
